# EUROPÄISCHE PATENTANMELDUNG

(11) **EP 3 016 224 A1**
(43) Veröffentlichungstag der Anmeldung: **04.05.2016**
(21) Anmeldenummer: 15003055.9
(22) Anmeldetag: 26.10.2015
(51) Int. Cl.: H02G 9/02, H02G 9/06, H01B 7/29

(54) **KABELKÜHLSYSTEM FÜR ERDVERLEGTE HOCH- UND HÖCHSTSPANNUNGSKABEL, INSBESONDERE FÜR HOCHLEISTUNGSKABELSYSTEME**

(30) Priorität: 27.10.2014 DE 102014015776
(71) Anmelder: nkt cables GmbH & Co. KG, 51061 Köln (DE)
(72) Erfinder: Brakelmann, Heinrich, 47495 Rheinberg (DE); Waschk, Volker, 51519 Odenthal (DE)

(57) **Zusammenfassung**

Es wird ein Kabelkühlsystem für erdverlegte Hoch- und Höchstspannungskabel vorgeschlagen, wobei das Kabelkühlsystem gebildet wird durch ein erstes Kühlmittel führendes Kühlrohr 14', 14", welches in Verlegetiefe der Kabel 2 und parallel zu ihnen und in deren Nachbarschaft angeordnet ist und ein zweites das Kühlmittel führende Rückkühlrohr 16', 16", welches oberhalb der Kabel 2 verläuft und an den jeweiligen Rohrabschnittsenden senkrechte Rohrverbindungen 15', 15", 17', 17" das Kühlrohr 14', 14" mit dem Rückkühlrohr 16', 16" verbinden. Eine erste senkrechte Rohrverbindung 15', 15" ist thermisch gegen die Umgebung isoliert, die andere senkrechte Rohrverbindung 17', 17" steht in wärmeleitendem Kontakt 22 mit der Umgebung. Es können zwei Kühlkreisläufe 10, 12 pro Kabelsystem 2 vorhanden sein. In der thermisch gegen die Umgebung isolierten senkrechten Rohrverbindung 15', 15" stellt sich eine erhöhte Temperatur des Kühlmittels ein. In der in wärmeleitendem Kontakt mit der Umgebung stehenden Rohrverbindung 17', 17" ist eine verminderter Temperatur des Kühlmittels vorhanden. Es wird somit ein Kühlkreislauf gebildet, in dem durch die thermische Unsymmetrie ein Umwälzen des Kühlmittels (vorzugsweise Wasser) erzwungen wird.

## Beschreibung

Die Erfindung betrifft ein Kabelkühlsystem für erdverlegte Hoch- und Höchstspannungskabel, insbesondere für Hochleistungskabelsysteme.

Im Normalbetrieb können Hochleistungskabelsysteme Verlustleistungen bis zu 50 W/m oder mehr entwickeln. Mit zunehmender Verlustleistung ist ohne Kühlung die Leistungsfähigkeit eines Starkstromkabels oder einer Kabelanlage begrenzt. Thermische Engpässe bei erdverlegten Kabel liegen vor insbesondere bei Verlegung in großer Legetiefe, bei hohem Wärmewiderstand zur Erdoberfläche und/oder wenn in unmittelbarer Nähe der Kabelanlage eine Fernheizungsleitung oder andere, Verlustwärme erzeugende Kabel geführt ist.

In einer Firmenschrift der Fa. Siemens (Künstlich gekühlte Kabel bis 420 kV. 1976 (611076 PA 3753) S. 1 - 14; Bestell-Nr. J 113/1057) sind vielfältige Vorrichtungen zur direkten oder indirekten Kühlung von Starkstromkabeln vorgeschlagen worden. Die Umwälzung der Kühlmittel erfolgt durch Pumpen.

Die DE 25 54 650 C3 zeigt ein Kühlsystem, bei dem ein verdampfbares Kühlmittel eingesetzt wird.

Anordnung und Verfahren zur Kühlung von Kabelverbindungsstellen sind der DE 32 28 890 A1 zu entnehmen, wobei eine Umschaltung der Flussrichtung des Kühlmittels vorgesehen ist. Hierbei wird die einmalige Umschaltung der Flussrichtung durch Einsatz eines Quellpulvers erreicht oder eine mehrmalige Umschaltung der Flussrichtung durch Entfernen (und wieder Auffüllen) einer in einer Kammer eingebrachten thermisch leitfähigen Masse vorgenommen. Dieses Verfahren ist für Hochleistungskabelsysteme mit großen Längen ungeeignet

Weitere bekannte Kühlsysteme sind derart ausgebildet, dass ein Kühlkreislauf betrieben wird, der ohne Zwangsbewegung des Kühlmittels auskommt. Beispiele solcher Kühlsysteme beruhen auf dem Prinzip der autarken Gravitationskühlung (oder auch Thermosyphonsystem genannt).

Aus der DE 2658816 A1 ist ein elektrisches Hochleistungs-Übertragungssystem mit innerer Kühlung bekannt. Das oder die Kabel des Übertragungssystems bestehen aus einem elektrischen Leiter mit einem inneren Hohlkanal und einem in diesem angeordneten Kühlmittelrohr. Die Kabel sind innerhalb eines Schutzrohres verlegt. In dem Bereich des Schutzrohrs kann die Verlustwärme des Kabels wegen des Luftpolsters im Stahlrohr weitaus schlechter abgeführt werden als unter den besseren Kühlbedingungen im Kabelgraben. Die genannte Schrift schlägt daher vor, dass in dem Schutzrohr auch mindestens ein Rückkühlrohr für das Kühlmittel eingebracht ist. Als Kühlmittel werden Luft, Flüssigkeit und ein Dampf-Flüssigkeits-Zweiphasengemisch diskutiert. Die Umwälzung des Zweiphasengemisches erfolgt ohne Pumpenaggregate selbständig.

In der EP 2637179 A1 ist ein selbstkühlendes Hochspannungskabel gezeigt, welches als koaxiales Kabel ausgebildet ist. Der Hohlraum zwischen Innenleiter und Außenleiter ist mit bei Betriebstemperatur flüssigem Isoliermittel gefüllt, welches durch Konvektion zur Kühlung über den Außenleitermantel des Kabels beiträgt.

Gemäß DE 19842076 A1 kann ein Kabel in einer thermisch isolierten, mit Luft gefüllten Hülle liegen, wobei die Kühlung ohne Zwangsbewegung nur durch Luft-Konvektion erfolgt.

Ein weiteres Kühlsystem geht aus der DE 28 32 826 C3 hervor. Es wird hierbei ein verflüssigbares Gas eingesetzt, welches durch natürliche Zirkulation bewegt wird. Die Abwärme wird durch einen Kondensator am höchsten Punkt des Systems abgeführt. Der Kühlkreislauf weist ein Kühlrohr mit einem nach unten und mit einem nach oben gerichteten Abschnitt auf. Die Abschnitte liegen hintereinander. Der nach oben gerichtete Abschnitt wird beheizt. Durch die Beheizung wird eine zusätzliche Konvektion bewirkt.

Es ist die Aufgabe der Erfindung, eine Verbesserung von Kühlsystemen anzugeben, die ohne Zwangsbewegung des Kühlmittels arbeiten.

Die Lösung der Aufgabe findet sich in den Merkmalen des Hauptanspruchs, wobei vorteilhafte Weiterbildungen der Erfindung in Unteransprüche formuliert sind.

Der Kern der Erfindung ist, dass ein Kabelkühlsystem vorgeschlagen wird, bei dem ein Kühlmittel führendes Kühlrohr parallel in Verlegetiefe des oder der Kabel und in deren Nachbarschaft angeordnet ist und ein zweites das Kühlmittel führendes Rückkühlrohr oberhalb (in geringer Verlegetiefe, in Nähe der Erdoberfläche) des oder der Kabel liegt und an den jeweiligen Rohrabschnittsenden senkrechte Rohrverbindungen das Kühlrohr mit dem Rückkühlrohr verbinden und eine erste senkrechte Rohrverbindung thermisch gegen die Umgebung isoliert ist, und die andere senkrechte Rohrverbindung in wärmeleitendem Kontakt mit der Umgebung steht.

Bei anfangs ruhendem Kühlmittel liegen zunächst symmetrische Verhältnisse mit gleichen Temperaturen in beiden vertikalen Kühlmittelsäulen vor. Nach und nach werden durch den Kabelbetrieb die Kühlrohre erwärmt. Die beiden vertikalen, im hydraulischen Verbund mit dem Kühlkreislauf liegenden Rohrverbindungen überbrücken eine Höhendifferenz, mit der sich die Kühlmittelsäulen der beiden senkrechten Rohre gegenüberstehen. Durch die unterschiedlichen thermischen Kontakte der vertikalen Rohrverbindungen bekommen die vertikalen Rohrverbindungen zwei unterschiedliche (mittlere) Temperaturen.

In der thermisch gegen die Umgebung isolierten Rohrverbindung liegt eine erhöhte Temperatur und in der in wärmeleitendem Kontakt mit der Umgebung stehenden Rohrverbindung liegt eine verminderte Temperatur des Kühlmittels (vorzugsweise Wasser) vor. Wegen der temperaturbedingt unterschiedlichen Dichten der beiden Kühlmittelsäulen führen die unterschiedlichen Gewichte zu einer Druckdifferenz. Diese Druckdifferenz sorgt, je nach resultierendem Strömungswiderstand in den Kühlrohren dafür, dass sich eine Strömung (mit einer Geschwindigkeit von einigen Zentimetern pro Sekunde) im Kreislauf einstellt mit fallendem Kühlmittel im kälteren Rohr (im folgenden auch mit Fallrohr bezeichnet) und mit aufsteigendem Kühlmittel im wärmeren Rohr (im folgenden auch mit Steigrohr bezeichnet). Dieser selbständige Umlauf des Kühlmittels ist aus der Heizungstechnik als Thermosyphoneffekt bekannt. Die wegzukühlenden Wärmemengen sind ausreichend, um thermische Engpässe von Kabeln und Kabelsystemen zu verringern und die elektrische Belastbarkeit zu erhöhen. In einfacher Abschätzung kann mit etwa 20 bis 40 W/m als abgeführte Kühlleistung eines Kühlkreislaufes gerechnet werden, wobei als Kühlmittel vorzugsweise Wasser eingesetzt wird.

Es zeigt sich, dass trotz relativ geringer Strömungsgeschwindigkeit von einigen Zentimetern pro Sekunde auch nur relative geringe Kühlmittelvolumina umgewälzt werden müssen. Damit kann auch der im höchsten Punkt des Kühlkreislaufs zu installierende Ausgleichsbehälter klein bleiben. Für eine Kühlabschnittslänge von 1000 m ist für diesen bei einer maximalen Temperaturspanne im als Kühlmittel eingesetzten Wasser von 50 K ein Volumen von etwa 0,4 m³ erforderlich. Für einen thermischen hot-spot-Bereich von 50 m Länge sind dies nur rd. 17 Liter.

Die Erfindung weist folgende Vorteile auf.

Es lassen sich mit dem Thermosyphoneffekt, hier in Form der Gravitationskühlung, günstige Kühlungseffekte mit geringen Druckdifferenzen von weniger als 1 bar und Strömungsgeschwindigkeiten von einigen Zentimetern pro Sekunde erreichen. Die erfindungsgemäße Gravitationskühlung ermöglicht einen mit höchstem Laststrom zulässigen Kabelbetrieb. Die Gravitationskühlung ist relativ leicht zu realisieren und zeichnet sich durch eine autarke, betriebssichere Funktionsweise aus.

Die erfindungsgemäße Gravitationskühlung ist nicht nur für kurze Abschnitte mit thermischen Engpässen wirksam, sondern auch für große Kabellängen geeignet.

Vorzugsweise können folgende Ausführungsformen realisiert sein. Die Ausführungsformen können einzeln oder gemeinsam, soweit technisch sinnvoll, umgesetzt sein.

Die als Fallrohr ausgebildete Rohrverbindung sollte in möglichst gut wärmeleitendem Material, mit möglichst großer thermisch wirksamer Oberfläche verlegt sein und nach unen zu dem Rückkühlrohr führen, welches in möglichst geringer Tiefe verlegt ist. Als wärmeleitendes Verfüllmaterial bietet sich Magerbeton oder - besser noch - hochwärmeleitfähiger Spezialbeton an, der wegen seiner im Vergleich mit normalem Magerbeton etwa um einen Faktor vier höheren Wärmeleitfähigkeit eine verkleinerte Fläche des Kühlbereichs erlaubt.

Ein wärmeleitender Kontakt kann zusätzlich auch über einen Luftkühler erzielt werden.

Kabelsysteme, die mit der erfindungsgemäßen Anordnung gekühlt werden sollen, können in bestimmten Abschnitten in einem Schutzrohr oder in einem Leitungskanal verlegt sein. Das Schutzrohr oder der Leitungsgang kann ebenfalls mindestens ein Kühlrohr aufnehmen. Vorzugsweise werden solche Kabelsysteme in Mehrfachsystemen - meistens als Kabeldoppelsystem - ausgelegt. Leitungsgänge können belüftet und auch begehbar ausgebildet sein.

Die Einzeladern des Kabelsystems können in Verlegerohren verlegt sein, welche als Kühlrohre benutzt werden können.

Es können ein, zwei oder mehr Kühlkreisläufe pro Kabelsystem vorhanden sein.

Vorzugsweise verläuft das Rückkühlrohr zwischen Kühlrohr und Erdoberfläche. Es kann jedoch eine weitere bevorzugte Variante ausgebildet sein, bei der das Rückkühlrohr in Erdbodennähe aber seitlich zum Kühlrohr geführt ist. Hier kann auch eine Verlegung in einem thermisch unterschiedlich belastetem Trassenabschnitt erwogen werden. In einer weiteren bevorzugten Variante kann das Rückkühlrohr auch außerhalb des thermisch belasteten Trassenabschnitts in ganzer oder in einer Teillänge verlegt sein.

Es kann ein zusätzlicher Kühlbereich für das Rückkühlrohr als weitere bevorzugte Variante vorgesehen sein, wobei ein, vorzugsweise in Strömungsrichtung letzter Abschnitt des Rückkühlrohrs in Schleifen (Mäandern) gelegt ist. Dieser Kühlbereich kann ebenfalls mit Material hoher Wärmeleitfähigkeit ausgefüllt und/oder mit thermisch möglichst großer wirksamer Oberfläche und in möglichst geringer Tiefe verlegt sein. Als Verfüllmaterial für diesen Bereich bietet sich wiederum Beton an.

Eigene Abschätzungen und Berechnungen sind auf der Grundlage eines im Kabelsystem vorliegenden Höchststroms von 3 500 A (ca. 2 300 MVA) bei einem Belastungsgrad von m = 0,80 vorgenommen worden. Im Kabelsystem sollen kunststoffisolierte Kabel verlegt sein, deren höchstzulässigen Leitertemperatur bei 90 °C liegt. Mit diesen Parametern kommt man - ohne Zusatzkühlung - zu einer höchstzulässigen Legetiefe von 1,9 m.

Größere Legetiefen, bzw. ungünstigere thermische Bedingungen verlangen die Beschränkung des Höchststroms oder Verbessung der Ableitung der Verlustwärme. Besondere thermische Einschränkung sind auch vorhanden, wenn über eine bestimmte Abschnittslänge eine Fernheizleitung in demselben Graben wie die Kabelanlage geführt wird oder diesen kreuzt. Würde das Fernheizrohr (Innentemperatur 160 bis 190 °C) in einer Tiefe von 2 m liegen, so muss die Kabelanlage entsprechend tiefer gelegt werden, beispielsweise bis zu einer Tiefe von 5 oder 10 m.

Auch bei solchen Legetiefen ist die erfindungsgemäße Anordnung erfolgreich einsetzbar. Wegen der großen Legetiefe steigt die höchste Leitertemperatur stark an; die Leitertemperatur erhöht sich durch eine Fernheizleitung zusätzlich. Mit zunehmender Legetiefe vergrößert sich die Höhendifferenz zwischen Kühlrohr und Rückkühlrohr, so dass die erzwungene Umwälzung durch die hydraulischen Verhältnisse begünstigt ist. Eine ungünstigere Legetiefe kann durch die größere Höhendifferenz mehr als kompensiert werden, weil dies zu einer größeren Strömungsgeschwindigkeit führt. Mit den vorgenommenen Abschätzungen ist nachweisbar, dass sich durch die erfindungsgemäße Anordnung die höchste Leitertemperatur unter die höchstzulässige Leitertemperatur von 90 °C drücken lässt.

Der erfindungsgemäßen Kühlanordnung sollte wegen der wechselnden Kühlmitteltemperaturen Ausdehnungsbehälter zugeordnet werden. Ein solcher Ausdehnungsbehälter sollte im höchsten Punkt des Kühlkreislaufes installiert werden. Dort ist eine Entlüftungseinrichtung vorzusehen. In jedem Ausdehnungsbehälter kann ein Schwimmer als Signalgeber vorgesehen sein, der über eine Meldevorrichtung kritisch niedrige Kühlmittelstände rechtzeitig meldet. Um den Wartungsaufwand (Nachfüllen von Kühlmittel) möglichst gering zu halten, können anstelle normaler Kunststoffrohre diffusionsdichte Mehrschichtrohre verwendet werden. Bei einem solchen Mehrschichtrohr ist zwischen einem inneren und einem äußeren Kunststoffrohr eine Aluminiumfolie eingebracht. Beispielsweise kann das Mehrschichtrohr bestehen aus: einem Innenrohr aus PE 100; einem Außenrohr aus Polypropylen und einer Barriereschicht aus gewickelter Aluminiumfolie (mit 80 mm Dicke). Mit einer solchen Rohranlage wäre sichergestellt, dass nur selten ein Nachfüllen von Kühlmittel in die Ausdehnungsbehälter erforderlich ist. Durch das automatische Meldesystem des Füllstandes sind regelmäßige Inspektionen vor Ort nur noch in geringem Maße erforderlich.

Die Erfindung wird in mehreren Figuren dargestellt, wobei diese im Einzelnen darstellen:
Fig. 1: einen einziger Kühlkreislauf,
Fig. 2: eine Schnittdarstellung eines Kabelsystems mit drei Kühlkreisläufen,
Fig. 3: einen Leitungsgang mit zwei Kabel-Doppelsystemen,
Fig. 4: eine Ansicht auf ein gekühltes Kabel-Doppelsystem mit Fallrohr und Steigrohr,
Fig. 5: ein Kühlkreislauf mit Kühlabschnitt in Schleifenform und
Fig. 6: ein Kühlkreis in zwei unterschiedlich thermisch belasteten Trassenabschnitten.

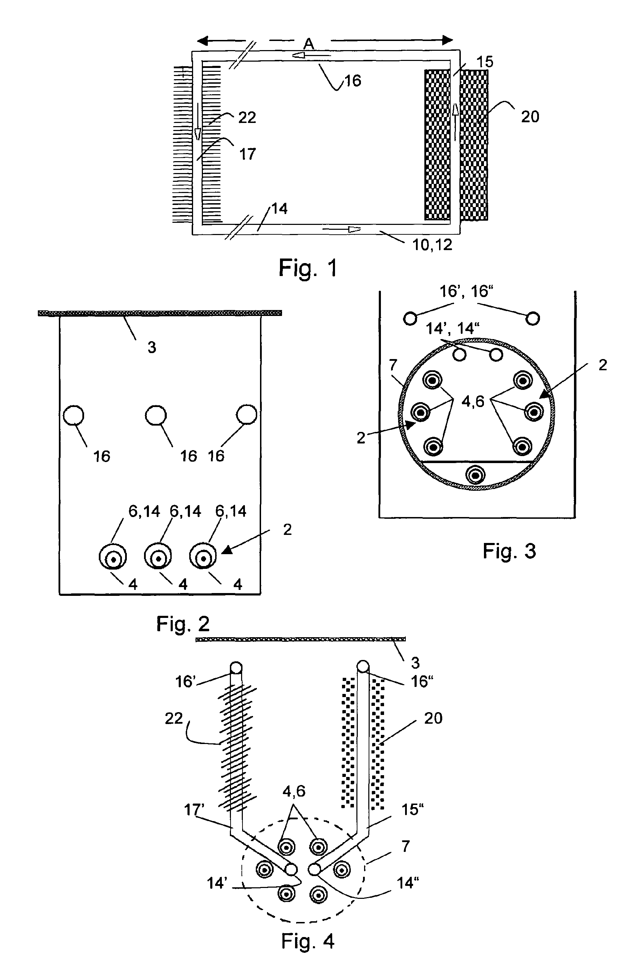

In Fig. 1 ist ein Kühlkreislauf (10, 12) mit der Abschnittslänge A schematisch dargestellt. Im unteren Bereich und in enger Nachbarschaft zu dem oder den Kabeln liegt ein Kühlrohr 14. Ein Rückkühlrohr 16 zur Wärmeabgabe liegt oben, in Nähe der Erdoberfläche. Die Strömung des Kühlmittels ist durch Pfeile angedeutet. Das Fallrohr 17 liegt am kühleren Ende des Kühlkreislaufs, das Steigrohr 15 liegt am wärmeren Ende. Das Fallrohr 17 steht in engem Kontakt mit der Umgebung, wodurch die Abkühlung bewirkt wird. Die als Steigrohr ausgebildete senkrechte Rohrverbindung 15 ist thermisch isoliert, wodurch dort die Temperatur des Kühlmittels am größten ist. Mit dem Kühlrohr 14 und dem Rückkühlrohr 16 ist ein geschlossener Kühlmittelkreislauf gebildet, in dem sich ein Kühlmittelumlauf mit einer Strömungsgeschwindigkeit von einigen cm/s einstellt.

Fig. 2 zeigt einen Schnitt durch einen Kabelgraben mit einem Kabelsystem, wobei die Kabel 4 jeweils in Verlegerohren 6 verlegt sind. Die Verlegerohre 6 selbst dienen als Kühlrohre 14', 14". Drei Rückkühlrohre 16', 16" zur Wärmeabgabe liegen oben, möglichst in Nähe der Erdoberfläche 3. Es sind somit drei Kühlkreisläufe vorhanden, wie sie schematisch in Fig. 1 gezeigt sind. Die senkrechten Rohrverbindungen (Steigrohr und Fallrohr) sind nicht gezeichnet. Die Einzeladern 4 des Kabelsystems können auch mit Kompensationsleitern versehen sein, die parallel zu den Einzeladern liegen. Letzteres kann auch für die in Fig. 3 gezeigter Anordnung gelten.

Fig. 3 zeigt einen (belüfteten) Leitungsgang 7 mit zwei Kabel-Doppelsystemen 2, und mit einem Reservekabel in der Tiefe des Leitungsgangs 7. Die Kabel 4 sind (wie in Fig. 2) jeweils in Verlegerohren 6 verlegt. Zwei Kühlrohre 14', 14" liegen im oberen Bereich des Leitungsgangs zur Kühlung; zwei Rückkühlrohre 16', 16" zur Wärmeabgabe liegen oben, außerhalb des Leitungsgangs erdoberflächennah.

Es handelt sich um eine sogenannte phase-splitting-Anordnung, bei der sechs kunststoffisolierte Kabel mit einer bestimmten, Magnetfeld-reduzierenden Phasenfolge eingesetzt sind. Die Kabel können Kupfer-Segmentleiter aufweisen, beispielsweise mit einem Leiterquerschnitt von 2500 mm² . Das Kabel-Doppelsystem liegt in einem äußeren Schutzrohr 7. Weiterhin können die sechs Kabel 4 beispielhaft in Verlegerohren aus PE (Aussenddurchmesser 250 mm / Wanddicke 15 mm) liegen und zueinander einen Achsabstand von 400 mm aufweisen. Typische Legetiefen (Achse der untenliegenden Kabel) sind ca. 2,50 m. In diesem Beispiel werden zwei Kühlrohre und zwei Rückkühlrohre eingesetzt, die jeweils zwei geschlossener Kühlkreisläufe bilden.

Mit Fig. 4 ist ein Schnitt durch ein Kabelsystem 2 dargestellt mit einem Kabeldoppelsystem. Zwei Kühlrohre 14', 14", beispielsweise aus PE mit den Dimensionen 150 mm/10 mm, sind in enger Nachbarschaft zu den Kabeln in die Kabelanordnung integriert, die beiden anderen Rückkühlrohre 16', 16" liegen möglichst nah an der Erdoberfläche, etwa in einer Tiefe von 1,0 m. Gestrichelt ist angedeutet, dass das Kabelsystem in einem äußeren Schutzrohr 7 liegen kann. Die Kabel 4 sind wiederum jeweils in Verlegerohren 6 verlegt. Es sind zwei Kühlkreisläufe vorhanden, die mit den Zeichen ' und " unterschieden sind. Links in der Figur ist eine senkrechte Rohrverbindung 17' in thermischem Kontakt 22 mit der Umgebung vorhanden, und rechts eine senkrechte Rohrverbindung 15" thermisch gegen die Umgebung isoliert (20). Im Steigrohr 15 befindet sich wärmeres Kühlmittel; im Fallrohr 17 befindet sich kühleres Kühlmittel. Im oberen Bereich (Nähe der Erdoberfläche 3) verlaufen die Rückkühlrohre 16', 16".

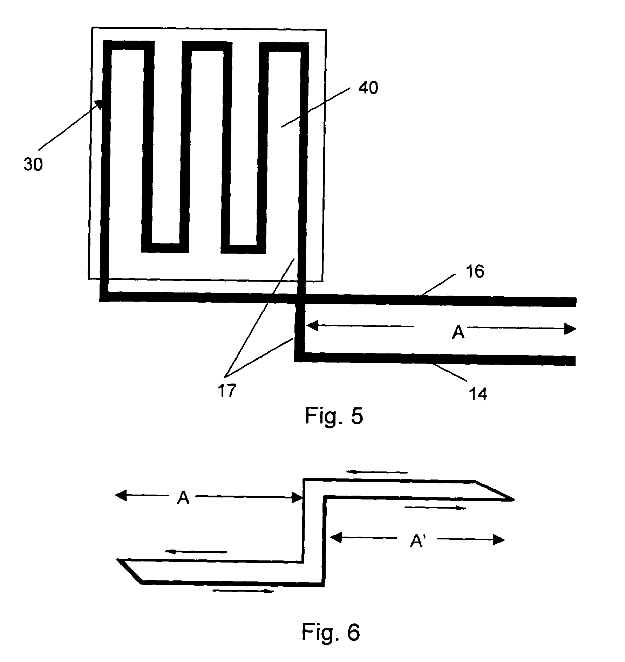

In der Fig. 5 wird ein Kühlkreislauf mit einem Kühlabschnitt in Schleifen oder Mäander 30 dargestellt. Vorzugsweise wird diese Verlegung am Ende eines Kreislaufabschnitts A und oberhalb des Fallrohrs vorgenommen. Es wird der Kühleffekt verstärkt, um das Kühlmittel möglichst stark abzukühlen. Es wird ein zusätzlicher Kühlbereich 40 gebildet, in dem die Rückkühlrohre mäanderförmig verlegt sind. Vorzugsweise wird die Verlegung in einem Kühlbereich vorgenommen, der mit gut wärmeleitendem Material gefüllt ist, beispielsweise mit hochwärmeleitfähigem Spezialbeton. Die Darstellung in Fig. 5 ist schematisch zu verstehen, da insbesondere die (waagerechten) Übergangsstücke im Mäander nicht eckig, sondern gerundet ausgebildet sein sollten.

In ähnlicher Weise kann die in Fig. 5 gezeigte schleifenförmige Verlegung auch über den Erdboden hinaus nach oben in Luft vorgenommen sein, so dass im Kühlbereich 40 eine alleinige oder eine zusätzliche Luftkühlung vorhanden ist. Der Kühlbereich in Luft kann auch dadurch verstärkt werden, dass die Kühlschlangen in Luft mit (nicht dargestellten) Kühlrippen versehen sind.

Gemäß Fig. 6 ist ein Kühlkreislauf gezeichnet, ohne die Kabel darzustellen. Dieser Kühlkreislauf ist derart ausgebildet, dass in einer Abschnittslänge A (links in der Figur) das Kühlrohr parallel und in Nähe der (nicht dargestellten) Kabel geführt ist und in einer anderen Abschnittslänge A' (rechts in der Figur) das Rückkühlrohr zwar in Erdbodennähe, aber nicht oberhalb des Kühlrohrs (wie schematisch in Fig. 1 dargestellt), sondern so geführt ist, dass es seitwärts zum Kühlrohr liegt. Der erste Trassenabschnitt A ist thermisch belastet und wird mit dem Kühlkreislauf gekühlt, während im zweiten Trassenabschnitt A' eine 'normale' Lage der Kabel (ohne Kühlbedarf) vorliegt. Im zweiten Trassenabschnitt A' kann eine Wärmeabgabe der Rohre an die Umgebung stattfinden. In dieser Variante sollte ein Strang der parallel zum Kabel liegenden Rohre (in Abschnitt A, links in der Figur) isoliert ausgebildet sein, so dass nur der nicht isolierte Strang zur Wärmeaufnahme dient.

Eine Variante eines Kühlkreislaufs soll abschließend angemerkt werden, die darin besteht, dass die Länge des zweiten oben liegenden Trassenabschnitts A' auf die Länge null gekürzt ist. Dann befinden sich die senkrechten Rohrverbindungen (Steigrohr und Fallrohr) nur an einem Ende des gekühlten Kabelsystems (Abschnitt A). Dies ist ein erfindungsgemäßer Unterschied zu einer Anordnung, wie sie in Fig. 1 dargestellt ist, bei der Steigrohr und Fallrohr an den unterschiedlichen Enden des Kabelsystems angebracht sind. In dieser letzten Variante liegen somit Kühlrohr und Rückkühlrohr in Verlegetiefe in Nachbarschaft des Kabelsystems, wobei das Rückkühlrohr in Nachbarschaft des Kabelsystems isoliert ausgeführt ist, so dass Wärmeaufnahme nur über das Kühlrohr erfolgt.

### Bezugszeichen

- A, A': Kreislauf- oder Trassenabschnitt
- 2: Kabelsystem
- 3: Erdoberfläche
- 4: Einzelkabel in Verlegerohr
- 6: Verlegerohr
- 7: Schutzrohr eines Kabelsystems, auch Leitungsgang
- 10: erster Kühlkreislauf
- 12: zweiter Kühlkreislauf
- 14' 14": Kühlrohr
- 15' 15": Steigrohr, senkrechte isolierte Rohrverbindung
- 16' 16": Rückkühlrohr
- 17' 17": Fallrohr, senkrechte Rohrverbindung (mit thermischem Kontakt)
- 20: Isolierung am Steigrohr
- 22: thermischer Kontakt am Fallrohr
- 30: Mäanderverlegung
- 40: zusätzlicher Kühlbereich

## Patentansprüche

1. Kabelkühlsystem für erdverlegte Hoch- und Höchstspannungskabel, wobei das Kabelkühlsystem gebildet wird durch ein erstes ein Kühlmittel führendes Kühlrohr (14', 14"), welches in Verlegetiefe parallel den Kabeln (2) angeordnet ist und ein zweites das Kühlmittel führendes Rückkühlrohr (16', 16"), welches oberhalb der Kabel (2) verläuft und wobei an den jeweiligen Rohrabschnittsenden senkrechte Rohrverbindungen (15', 15", 17', 17") das Kühlrohr (14', 14") mit dem Rückkühlrohr (16', 16") verbinden und eine erste, im folgenden mit Steigrohr bezeichnete senkrechte Rohrverbindung (15', 15") thermisch gegen die Umgebung isoliert ist, und die andere, im folgenden mit Fallrohr bezeichnete senkrechte Rohrverbindung (17', 17") in wärmeleitendem Kontakt (22) mit der Umgebung steht und wobei ein zusätzlicher Kühlbereich (40) für das Rückkühlrohr (16', 16") derart vorgesehen ist, dass ein letzter Abschnitt des Rückkühlrohrs in Schleifen oder Mäandern verlegt ist.

2. Kühlkreislauf nach Anspruch 1, **dadurch gekennzeichnet dass** das Rückkühlrohr (16', 16") im zusätzlichen Kühlbereich (40) in Schleifen oder Mäandern (30) gelegt ist.

3. Kühlkreislauf nach Anspruch 1 oder 2, **dadurch gekennzeichnet, dass** der zusätzliche Kühlbereich (40) in Luft verläuft.

4. Kühlkreislauf nach einem der vorhergehenden Ansprüche, **dadurch gekennzeichnet, dass** das Rückkühlrohr (16', 16") zwischen Kühlrohr (14', 14") und Erdoberfläche (3) verläuft.

5. Kühlkreislauf nach einem der vorhergehenden Ansprüche, **dadurch gekennzeichnet, dass** das Fallrohr (17) in gut wärmeleitendem Material (22) verlegt ist,

6. Kühlkreislauf nach Anspruch 5, **dadurch gekennzeichnet, dass** als gut wärmeleitendes Material (22) Beton eingesetzt ist.

7. Kühlkreislauf nach einem der vorhergehenden Ansprüche, **dadurch gekennzeichnet, dass** zwei oder mehr Kühlkreisläufe (10, 12) pro Kabelsystem (2) vorhanden sind.

8. Kühlkreislauf nach einem der vorhergehenden Ansprüche, **dadurch gekennzeichnet, dass** als Kühlmittel Wasser eingesetzt ist.

9. Kühlkreislauf nach einem der vorhergehenden Ansprüche, **dadurch gekennzeichnet, dass** an einem Kühlkreislauf (10, 12) ein Ausdehnungsbehälter angeordnet ist.

10. Kühlkreislauf nach einem der vorhergehenden Ansprüche, **dadurch gekennzeichnet, dass** das Kabelsystem (2) in einem Schutzrohr (7) angeordnet ist, welches ebenfalls ein Kühlrohr (14', 14") mindestens eines Kühlkreislaufs (10, 12) aufnimmt.

11. Kühlkreislauf nach einem der vorhergehenden Ansprüche, **dadurch gekennzeichnet, dass** der Kühlkreislauf (10, 12) in einem Mehrfachkabelsystem (2) eingesetzt ist.

12. Kühlkreislauf nach einem der vorhergehenden Ansprüche, **dadurch gekennzeichnet, dass** Einzeladern (4) des Kabelsystems (2) in Verlegerohren (6) verlegt sind, welche ebenfalls als Kühlrohre (14', 14") benutzt werden.

13. Kühlkreislauf nach einem der vorhergehenden Ansprüche, **dadurch gekennzeichnet, dass** das Rückkühlrohr außerhalb des thermisch belasteten Trassenabschnitts in ganzer oder in Teillänge verlegt ist sein.
